# EUROPEAN PATENT SPECIFICATION

(11) **EP 2 451 197 B1**
(45) Date of publication and mention of the grant of the patent: **02.05.2018**
(21) Application number: 10793522.3
(22) Date of filing: 12.03.2010
(51) Int. Cl.: H04W 4/00, H04W 4/06, H04W 4/20

(54) **METHOD AND APPARATUS FOR NOTIFICATION AND INTERACTION OF MULTI-SCREEN SERVICE IN COMMUNICATION SYSTEM**
VERFAHREN UND VORRICHTUNG ZUR MITTEILUNG DER INTERAKTION ZWISCHEN MEHRSCHIRM-DIENSTEN IN EINEM KOMMUNIKATIONSSYSTEM
PROCÉDÉ ET APPAREIL POUR LA NOTIFICATION ET L'INTERACTION DE SERVICES MULTI-ÉCRAN DANS UN SYSTÈME DE COMMUNICATION

(30) Priority: 02.07.2009 CN 200910054326
(43) Date of publication of application: 09.05.2012
(73) Proprietor: Alcatel Lucent, 91620 Nozay (FR)
(72) Inventor: WANG, Nan, Shanghai 201206 (CN); WAN, Zhikun, Shanghai 201206 (CN)
(74) Representative: Wetzel, Emmanuelle
(86) International application number: PCT/CN2010/071005
(87) International publication number: WO 2011/000227

(56) References cited:
- CN-A- 1 801 718
- CN-A- 1 992 937
- CN-A- 101 635 832
- US-A1- 2006 019 618
- US-A1- 2009 015 660
- "Mobile Broadcast Services ; OMA-TS-BCAST_Services-V1_0-20070925-C", OMA-TS-BCAST_SERVICES-V1_0-20070925-C, OPEN MOBILE ALLIANCE (OMA), 4330 LA JOLLA VILLAGE DR., SUITE 110 SAN DIEGO, CA 92122 ; USA , no. 1.0 25 September 2007 (2007-09-25), pages 1-151, XP064032123, Retrieved from the Internet: URL:ftp/Public_documents/BCAST/Permanent_d ocuments/ [retrieved on 2007-09-25]

## Description

### Field of the Invention

The present invention relates to the field of communications and in particular to multi-screen service (which provides a multimedia service for at least two of a television set, a personal computer and a handheld portable terminal of a certain user) and the serving technology thereof.

### Background of the Invention

In recent years, multi-screen service has gained increasing attention along with the development of mobile communications. The multi-screen service requires a service provider to extend various communication services, particularly multimedia contents to various end devices, e.g., a television set, a personal computer, a handheld portable terminal, etc., so as to provide real multi-screen experience. The multi-screen service will bring a significant viscosity of users to thereby enhance competitive advantage of the communication service provider.

Microsoft has once developed its uniform communication experience with such a fundamental concept of providing the ability to access a communication service in any device anywhere and anytime. Multi-screen experience available from Alcatel-Lucent embodies the same fundamental concept. The multi-screen service allows the service provider to provide a user with a personalized service so as to improve user experience. The multi-screen service enables the user to move from one place to another and to receive subscribed content through any of various end devices, e.g., a television set, a personal computer, a handheld portable terminal, etc.

One existing method of notifying a multi-screen service user is to transmit a short message. However, a uniform short message format for feeding back user's service requirement of the multi-screen service is absent among different handheld portable terminals. More importantly, the short message may be subject to such a long delay which is typically variable that a server cannot make a timely response to a short message command of the user, thus degrading the quality of service.

Another method of enabling a user to interact is to encapsulate a service request command input by a user on a 3G mobile phone into user data application part in the 3GPP protocol to thereby perform rapid interaction of request command for multi-party conference in 3G networks. However, this method is suitable for a video conference based upon circuit switching, which requires that the communication system has to be deployed over WCDMA (i.e., 3GPP) network in the 3G network and both the mobile phone of the user and network devices have to support the 3GPP protocol and H.323 and H.324 protocols, and the user has to input the service request command in intricate hexadecimal numbers due to the limitation of 3GPP user data application part protocol. Also, since the user data application part protocol is based upon T.120 and T.140 protocols in the circuit domain, data in the user data application part has to firstly be encapsulated into H.323 and H.324 protocols and be H.323-multiplexed prior to transmission and then H.323-demultiplexed upon arriving at the other end, which will undoubtedly increase the computation load of the user's 3G mobile phone and the network devices as well as prolong the delay. In summary, this video conference-oriented method (based upon circuit switching) cannot be applied to the multi-screen service based upon IP packet switching due to its limitation and specialization.

Therefore it is desirable to provide a mechanism for new service notification and interaction in the existing multi-screen service solution.

### Summary of the Invention

In order to address the foregoing problem present in the prior art, the invention proposes a method and apparatus for notification and interaction of a multi-screen service in a communication system.

According to a first aspect of the invention, there is provided a method of collecting a multi-screen service request of a user in a network device of a communication network, which includes the steps of: A. transmitting, to a handheld portable terminal of the user, an OMA interactive media document, the OMA interactive media document comprising multimedia service notification information and at least one set of media objects comprising a multi-screen service request command template; and B. receiving a multi-screen service request command fed back from the user and determining a requirement of the user on a multi-screen service according to the multi-screen service request command.

According to a second aspect of the invention, there is provided a method of requesting a multi-screen service in a handheld portable terminal of a communication network, which includes the steps of: a. receiving, from a network device, an OMA interactive media document, the OMA interactive media document including multimedia service notification information and at least one set of media objects including a multi-screen service request command template; b. acquiring the multi-screen service request command template in the set of media objects according to a protocol supported by the handheld portable terminal; c. editing a multi-screen service request command based on the acquired multi-screen service request command template according to a user input; and d. transmitting the multi-screen service request command to the network device.

According to a third aspect of the invention, there is provided a collecting apparatus for collecting a multi-screen service request of a user in a network device of a communication network, which includes: a first transmitting means for transmitting, to a handheld portable terminal of the user, an OMA interactive media document, the OMA interactive media document including multimedia service notification information and at least one set of media objects including a multi-screen service request command template; and a first receiving means for receiving a multi-screen service request command fed back from the user and determining a requirement of the user on a multi-screen service according to the multi-screen service request command.

According to a fourth aspect of the invention, there is provided a requesting apparatus for requesting a multi-screen service in a handheld portable terminal of a communication network, which includes: a second receiving means for receiving from a network device an OMA interactive media document, the OMA interactive media document including multimedia service notification information and at least one set of media objects including a multi-screen service request command template; a template acquiring means for acquiring the multi-screen service request command template in the set of media objects according to a protocol supported by the handheld portable terminal; a command editing means for editing a multi-screen service request command based on the acquired multi-screen service request command template according to a user input; and a second transmitting means for transmitting the multi-screen service request command to the network device.

There exists no method of defining a uniform multi-screen service request command using the OMA standard so far in the prior art, in particular for example the OMA specification "Mobile Broadcast Services", BCAST, Candidate version 1.0 - 25th of September, 2007. In the present invention, a uniform multi-screen service request command template is defined by using an OMA interactive media document so that a notification of a network device about a multi-screen service and a request command of a user for multi-screen service content are compatible with the Open Mobile Alliance (OMA) standard. With the multi-screen service request command template defined in the OMA interactive media document in the invention, the user can create a request command simply and rapidly to thereby greatly reduce the probability of an input error of the user, and it is not necessary to set up a connection in advance, thus greatly improving the quality of experience of the user and shortening a delay. The network device can make a timely and accurate response to the request command of the user due to the uniform command template in use at a client.

Furthermore, the different embodiments of the method and device according to the invention can further offer a part or all of the following advantages:
1) The network device can provide the user with a WAP/WWW page or link with which the request command can be transmitted conveniently so that the user is provided with a new approach to request a multi-screen service more simply and conveniently through a personal computer or a handheld terminal.
2) With the uniform command template of the invention, a software developer of the client can correspondingly make a more friendly input control interface, e.g., a dropdown menu, an input box, or a temporarily pop-up help box attached thereto etc., so that the user can edit the multi-screen service request command using simple operations, e.g., of inputting a number, selecting some options, etc.

Along with the globalized development of the OMA, the production value of OMA members has occupied more than 90% of the total production value of mobile communications. With the use of the OMA application protocol, the invention can be applied to any radio communication system in support of the OMA, e.g., various radio communication networks of 2.5G, 3G, WiMAX, LTE, 4G, etc. as well as an a hybrid network consisted of those networks.

### Brief Description of the Drawings

Other features, objects and advantages of the invention will become more apparent from the following detailed description of non-limiting embodiments with reference to the drawings in which:
Fig.1 illustrates a schematic structural diagram of a communication system according to an embodiment of the invention;
Fig.2 illustrates a flow chart of a systematic method according to an embodiment of the invention;
Fig.3 illustrates a schematic diagram of an OMA interactive media document including a multi-screen service request command template according to an embodiment of the invention;
Fig.4 illustrates a block diagram of a collecting apparatus for collecting a multi-screen service request of a user in a network device of a communication network according to an embodiment of the invention; and
Fig.5 illustrates a block diagram of a requesting apparatus for requesting a multi-screen service in a handheld portable terminal of a communication network according to an embodiment of the invention.

Identical or like reference numerals will denote identical or like step features or means (modules).

### Detailed Description of the Invention

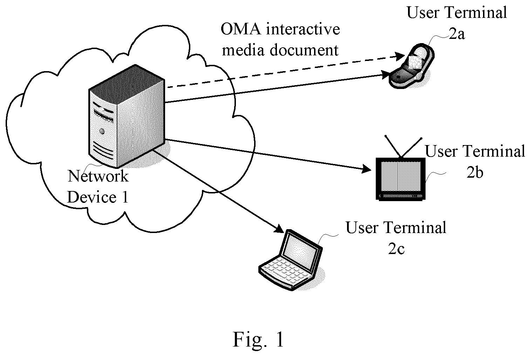

Fig.1 illustrates a schematic structural diagram of a communication system according to an embodiment of the invention. As illustrated, the system includes a network device 1 and user terminals 2a, 2b and 2c. The user terminals can be any type of end devices capable of receiving information or performing information interaction over a network, particularly an end device capable of receiving multimedia information, e.g., a desktop computer, a notebook computer, a mobile phone, a Personal Digital Assistant (PDA), a television set, etc. The user terminals 2a, 2b and 2c as illustrated belong to the same user, for example but not limited thereto, the user terminal 2a is a mobile phone, the user terminal 2b is a television set, and the user terminal 2c is a computer, and the user can receive multi-screen service content through any of the terminal devices, where notification and request interaction of the multi-screen service can be performed between the network device 1 and the user terminal 2a by using an OMA interactive media document. In the drawing, dotted lines represent a notification of the multi-screen service and a multi-screen service request command which are interacted between the network device 1 and the user terminal 2a, and solid lines represent transmission of multi-screen service content. Those skilled in the art shall appreciate that transmission of multi-screen service content can be performed by the network device 1 or another server mutually independent of the network device 1.

Those skilled in the art shall appreciate that Fig.1 illustrates just an embodiment and the communication system providing the multi-screen service will not be limited to the structure in Fig.1. The user in the system may not necessarily possess all the three types of end devices, i.e., the mobile phone, the television set and the computer; for example, the user can posses the mobile phone and the television set, or the user can posses the mobile phone and the computer. The user can receive multi-screen service content through any of the end devices he possesses, and interaction of the notification and the request of the multi-screen service can be performed between the network device and the handheld portable terminals of the user by using an OMA interactive media document.

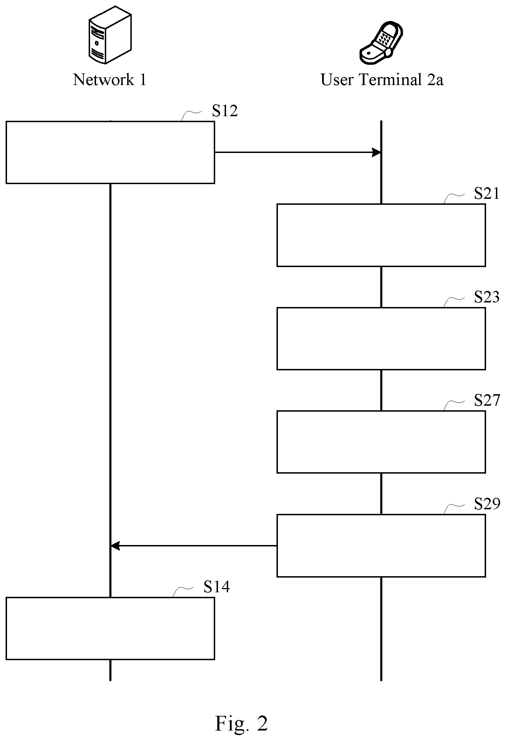

Fig.2 illustrates a flow chart of a systematic method according to an embodiment of the invention. The invention will be set forth below from the perspective of a method with reference to Fig.1 and Fig.2 by describing a flow of a method for collecting a multi-screen service request of a user in a network device of a communication network and a flow of a method for requesting a multi-screen service in a handheld portable terminal of a communication network.

The following steps will be performed at the side of the network device 1:

Firstly in the step S12, the network device 1 transmits an OMA interactive media document to the user terminal 2a, i.e., the handheld portable terminal of the user, where the OMA interactive media document includes multimedia service notification information and at least one set of media objects including a multi-screen service request command template.

A playing terminal of a multi-screen service can be a handheld portable terminal, a television set or a computer, and typically only the handheld portable terminal can be carried around with the user and on standby all the time, so transmitting the service request command template to the handheld portable terminal facilitates a timely feedback from the user.

Various mobile networks exist, and handheld portable terminals of the different mobile networks support different protocols. For compatibility with various systems, protocols and devices, the OMA interactive media document transmitted by the network device 1 can include a plurality of sets of media objects, each of which corresponds to a multi-screen service request command template based upon a specific protocol. For example but not limited thereto, a set of media objects can be a multi-screen service request command template based upon the OMA protocol or a multi-screen service request command template based upon the SMS protocol or a multi-screen service request command template based upon the SIP protocol or a link to a multi-screen service request command shortcut control page. Such link can be a link based upon the WAP protocol or a web link based upon the HTTP protocol.

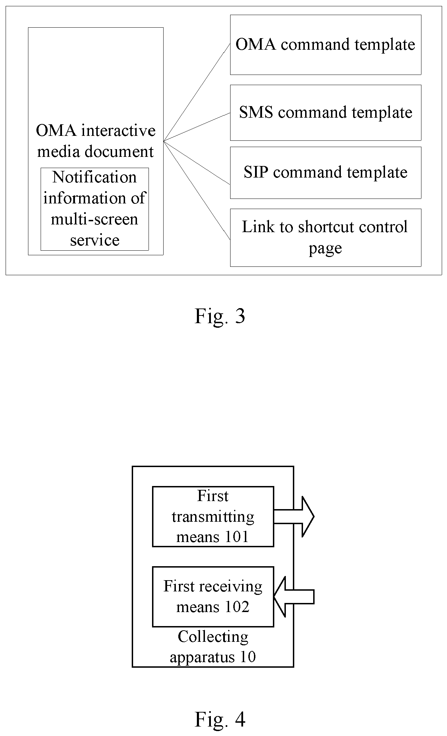

Fig.3 illustrates a schematic diagram of an OMA interactive media document including a multi-screen service request command template according to an embodiment of the invention. As illustrated in Fig.3, the OMA interactive media document transmitted by the network device 1 preferably includes all the four sets of media objects, i.e., a multi-screen service request command template based upon the OMA protocol, a multi-screen service request command template based upon the SMS protocol, a multi-screen service request command template based upon the SIP protocol and a link to a multi-screen service request command shortcut control page. Of course the OMA interactive media document transmitted by the network device 1 can alternatively include two, three or even only one of the foregoing sets of media objects and can further include a multi-screen service request command template based upon another protocol. The user terminal 2a can determine one of the multi-screen service request command templates according to its supported protocol, edit a multi-screen service request command according to the determined template and feed it back to the network device 1.

The user receiving a multi-screen service is interested particularly in three W's (What, Where and When), i.e., multi-screen service content, a playing terminal and playing time. Therefore, the multi-screen service request command template preferably includes information related to the foregoing three items. Those skilled in the art shall appreciate that information related to the multi-screen service content, the playing terminal and the playing time can be in the form of a string of characters, a number or another identifier. For example the three types of playing terminals can be identified in a string of characters respectively as "Mobile", "PC" and "TV" or numerically respectively as "001", "002" and "003". Correspondingly, the multi-screen service request command fed back from the user terminal 2a further includes a requirement of the user on the multi-screen service content, the playing terminal and the playing time.

As described above, the multi-screen service request command template includes a number of elements, e.g., multi-screen service content, a playing terminal, playing time, etc. With the purpose of a uniform command format, an arrangement order of the respective elements shall be specified in the multi-screen service request command template. For example, a request command template in which a playing terminal, playing time, a playing date and service content are arranged in that order can be represented as {_, _:_, yy/mm/dd, _}; and the OMA interactive media document can further include the definitions of respective fields of the template and a guidance regarding how the user constructs his or her own request command. Alternatively, the request command template can be an already well edited request command, and a part or all of the fields therein can be modified by the user as desired; for example, a request command template can be represented as {Mobile,9:00,20090615,NBA Final 2009 #5}, where the underlined fields can be modified by the user. The description for the format of the multi-screen service request command template herein is merely illustrative but not limiting.

Furthermore, the OMA interactive media document can further include multi-screen service notification information, which can include any one or more of the title of multi-screen service content, default playing time, a charging criterion, a charging mode and multimedia digest information of the multi-screen service content. For example, if an item of new multi-screen service content is a film, then multi-screen service notification information can include the title of the film and corresponding multimedia digest information including a brief literal introduction and/or a video clip of the film. The user can decide whether to receive the entire film by watching the brief literal introduction and/or the video clip of the film. In another example, an item of new multi-screen service content is an impending football match, then multi-screen service notification information can include the title of the football match, default playing time, a charging criterion, multimedia digest information, etc., where the default playing time is live show time of the football match, the charging criterion can charge the user differently dependent upon whether he or she watches a live show or a video record, and the multimedia digest information can include a brief literal introduction of the match and/or a historical video of two competing sides of the match. The user can decide whether to watch the match according to the multimedia digest information and decide whether to watch the live show or the video record according to the charging criterion. The quality of user experience can be enhanced greatly by adding the abundant notification information related to the multi-screen service into the OMA interactive media document transmitted to the handheld portable terminal of the user.

Different users have different preferences of multi-screen service content. For example, some users prefer to a sport program while some prefer to current political news. Furthermore, different users possess different end devices, that is, posses different ranges of available playing terminals. For example, some users possess a handheld portable terminal and a television set, some users possess a handheld portable terminal and a computer, and some users possess all of a handheld portable terminal, a television set and a computer. Therefore, preferably, the step of determining the OMA interactive media document according to a subscription agreement of the user is further included before the step S12.

Specifically, the user can select the type of the multi-screen service he or she wishes to receive upon subscribing to the multi-screen service, and the network device 1 determines the multi-screen service notification information and the multi-screen service request command template in the OMA interactive media document to be transmitted to the user according to the subscription agreement of the user. Users can be grouped according to their different subscription requirements. For example but not limited thereto, users who have subscribed to a sport program are grouped together; and when there is new content of the sport program, the network device 1 multicasts, to handheld portable terminals of this group of users, an OMA interactive media document with multi-screen service notification information including information related to the new content of the sport program. Multi-screen service content with a very high attention rate can be set by default as being possibly received by all the users. For example, when there is content of a live show of an Olympic Games opening ceremony or a live show of the 60th anniversary of National Day, the network device 1 can broadcast, to handheld portable terminals of all the users, an OMA interactive media document with multi-screen service notification information including information related to the corresponding content. Of course, the network device 1 can alternatively transmit individually, to a handheld portable terminal of a specific user, an OMA interactive media document with multi-screen service notification information including information related to content of a unique type of service to which the user subscribes.

Furthermore, information related to a multi-screen service playing terminal in the multi-screen service request command template can include any one or more of identification information of a handheld portable terminal, identification information of a computer and identifier information of a television set. Specifically, the user can select a range of available playing terminals for receiving the multi-screen service upon subscribing to the multi-screen service, and the network device 1 determines information related to a multi-screen service playing terminal in the multi-screen service request command template in the OMA interactive media document to be transmitted to the user according to the subscription agreement of the user. For example, a user possesses a handheld portable terminal and a computer, and the range of available playing terminals selected by him upon subscribing to the multi-screen service includes only a handheld portable terminal and a computer, and the network device 1 transmits, to the handheld portable terminal of the user, an OMA interactive media document with a multi-screen service request command template carrying information related to a playing terminal including identification information of the handheld portable terminal and identification information of the computer. In another feasible solution, the information related to a playing terminal carried by the multi-screen service request command template in the OMA interactive media document transmitted by the network device 1 to the to a handheld portable terminal of any user includes all the identification information of the three playing terminals, and the multi-screen service request command template further includes status information of the respective playing terminals so that the network device 1 sets part or all of the status information of the three playing terminals to "Available" and the other status information to "Unavailable" according to the subscription agreement of the user.

All of the foregoing scenarios in which the OMA interactive media document is determined according to the subscription agreement of the user are merely illustrative but not limitative of the invention, and those skilled in the art can make other variation or modifications in light of the foregoing description. Furthermore, those skilled in the art shall appreciate that the subscription agreement of the user can be updated as required for the user. For example, the type of the multi-screen service and/or the range of available playing terminals can be updated.

According to an embodiment of the invention, the multi-screen service request command template in the OMA interactive media document transmitted to the handheld portable terminal of the user can further include information related to a transmission priority of the multi-screen service. Thus, the user can be provided with selection for different qualities of service.

As described above, the set of media objects in the OMA interactive media document can include a link to a multi-screen service request command shortcut control page, which can be a link based upon the WAP protocol or a link based upon the HTTP protocol. In the page to which the link points, information related to multi-screen service content, a playing terminal, playing time, etc. can be included, and a dropdown menu of options, an input box or another edition control can be set to thereby provide the user with an approach to request a multi-screen service more simply and conveniently. Furthermore, the page can further include multimedia digest information related to multi-screen service content to facilitate a selection by the user and improve the quality of user experience. The user can access a multi-screen service request command shortcut control page based upon the HTTP protocol and perform a corresponding operation such as inputting a number or selecting some options through the user terminal 2c, i.e., the personal computer. In response to the input of the user, the edition control built in the page will automatically generate and transmit the multi-screen service request command to the network device 1. Those skilled in the art shall appreciate that the network device 1 and a server for providing the multi-screen service request command shortcut control page can be the same device or devices independent of each other.

In the step S14, the network device 1 receives the multi-screen service request command fed back from the user and determines the requirement of the user on the multi-screen service according to the multi-screen service request command. As described above, the multi-screen service request command fed back from the user can come from the handheld portable terminal of the user, e.g., the user terminal 2a, etc., or the server providing the multi-screen service request command shortcut control page.

Specifically, for example, the user terminal 2a feeds back a multi-screen service request command based upon the OMA protocol with the content of {Mobile, 9:00, 20090615, NBA Final 2009 #5; PC, None; TV, 21:00, 20090615, NBA Final 2009 #5}, and the network device 1 can determine, according to the request command, that: the user requests watching a live show of the 5^{th} round of NBA Finals, 2009 at 9:00 on his or her handheld portable terminal, i.e., the user terminal 2a, and a video record of the same match on his or her television set at 21:00. Those skilled in the art shall appreciate that the foregoing form and content of the multi-screen service request command are merely illustrative but not limitative of the invention.

The following steps will be performed at the side of the user terminal 2a, i.e., the handheld portable terminal of the user:

Firstly in the step S21, the user terminal 2a receives the OMA interactive media document from the network device 1, where the OMA interactive media document includes at least one set of media objects including a multi-screen service request command template.

As described above, the OMA interactive media document transmitted by the network device 1 preferably include four sets of media objects, i.e., a multi-screen service request command template based upon the OMA protocol, a multi-screen service request command template based upon the SMS protocol, a multi-screen service request command template based upon the SIP protocol and a link to a multi-screen service request command shortcut control page respectively. Of course, the OMA interactive media document transmitted by the network device 1 can alternatively include two, three or even only one of the foregoing sets of media objects and can further include a multi-screen service request command template based upon another protocol.

Then in the step S23, the user terminal 2a can acquire the multi-screen service request command template in the set of media objects according to its supported protocol.

Specifically, the protocol supported by the user terminal 2a can include any one or more of the OMA protocol, the SMS protocol, the SIP protocol, the WAP protocol and the HTTP protocol.

In a very possible scenario, the OMA interactive media document received by the user terminal 2a includes a plurality of sets of media objects, which are a multi-screen service request command template based upon the OMA protocol, a multi-screen service request command template based upon the SMS protocol, a multi-screen service request command template based upon the SIP protocol and a link to a multi-screen service request command shortcut control page based upon the WAP protocol and/or the HTTP protocol, respectively.. According to some embodiments of the invention, if the user terminal 2a supports more than one of the foregoing protocols, e.g., the OMA protocol, the SMS protocol, the SIP protocol, the WAP protocol, etc., then the user terminal 2a can fetch a plurality of multi-screen service request command templates respectively based upon the different protocols. Preferably, the user terminal 2a will determine a multi-screen service request command template in a set of media objects corresponding to one of its supported protocols according to a predetermined rule. For different purposes, the predetermined rule here can be any one or more of the following: a transmission time for the multi-screen service request command based upon the determined protocol being the shortest; a bandwidth resource occupied by the multi-screen service request command based upon the determined protocol being the least. For example, the user terminal 2a can select the command template based upon the OMA protocol or the command template based upon the SIP protocol in order to achieve the least transmission time for the fed-back multi-screen service request command.

Then in the step S27, the user terminal 2a edits a multi-screen service request command based upon the acquired multi-screen service request command template according to an input of the user.

For example, the user terminal 2a has determined the multi-screen service request command template based upon the OMA protocol in the step S23 and then edits, in the step S27, a multi-screen service request command in compliance with the OMA protocol based upon the determined template according to an input of the user.

According to some embodiments of the invention, if the multi-screen service request command template includes information related to multi-screen service content, a playing terminal and playing time, then the user terminal 2a edits, in the step S27, a multi-screen service request command including a requirement of the user on the multi-screen service content, the playing terminal and the playing time according to an input of the user. For example, a well edited multi-screen service request command based upon the OMA protocol can be represented in the form of a string of characters as {Mobile, 9:00, 20090615, NBA Final 2009 #5; PC, None; TV, 21:00, 20090615, NBA Final 2009 #5}, and this command indicates the user requests watching a live show of the 5^{th} round of NBA Finals, 2009 at 9:00 on his or her handheld portable terminal, i.e., the user terminal 2a, and a video record of the same match on his or her television set at 21:00.

According to some embodiments of the invention, if the multi-screen service request command template further includes information related to a transmission priority of the multi-screen service, then the user terminal 2a edits, in the step S27, a multi-screen service request command including a requirement of the user on the transmission priority of the multi-screen service according to an input of the user.

Then in the step S29, the user terminal 2a transmits the well edited multi-screen service request command to the network device 1.

According to an embodiment of the invention, the following step is further included between steps S23 and S27: the user terminal 2a provides, according to the acquired multi-screen service request command template, an input parameter-limited user interface for the user to edit the multi-screen service request command. Specifically, the user terminal 2a can provide a more friendly input control interface according to the multi-screen service request command template, e.g., providing a dropdown menu, an input box, a temporarily pop-up help box attached thereto and the like, so that the user can complete the editing of the multi-screen service request command by means of simple operations such as inputting a number, selecting some options, etc. For example, when the multi-screen service request command template includes information related to multi-screen service content, a playing terminal, playing time and a playing date, a corresponding input control interface can associate the information related to the playing terminal and the service contents together and provide a plurality of combinations as indexed items, so that the user can just input into the fields of "Playing Time" and "Playing Date" for a desired specific item of "Playing Terminal + Service Content". The description here of the input control interface is merely illustrative but not limitative.

Fig.4 illustrates a block diagram of a collecting apparatus for collecting a multi-screen service request of a user in a network device of a communication network according to an embodiment of the invention. As illustrated in Fig.4, the collecting apparatus 10 includes first transmitting means 101 and first receiving means 102. The collecting apparatus 10 is typically arranged in a network device in a communication network, e.g., the network device 1.

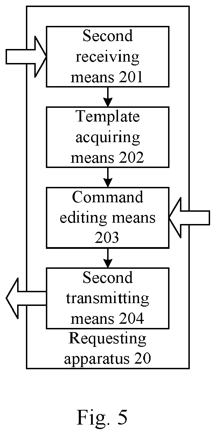

Fig.5 illustrates a block diagram of a requesting apparatus for requesting a multi-screen service in a handheld portable terminal of a communication network according to an embodiment of the invention. As illustrated in Fig.5, the requesting apparatus 20 includes second receiving means 201, template acquiring means 202, command editing means 203 and second transmitting means 204. The requesting apparatus 20 is typically arranged in a handheld portable terminal of a communication network, e.g., the user terminal 2a.

The invention will be set forth below from the perspective of a device with reference to Fig.2, Fig.4 and Fig.5.

The following steps will be performed at the side of the network device 1:

Firstly the first transmitting means 101 in the collecting apparatus 10 transmits an OMA interactive media document to the user terminal 2a, i.e., the handheld portable terminal of the user, where the OMA interactive media document includes at least one set of media objects including a multi-screen service request command template.

A playing terminal of a multi-screen service can be a handheld portable terminal, a television set or a computer, and typically only the handheld portable terminal can be carried around with the user and on standby all the time, so transmitting the service request command template to the handheld portable terminal facilitates a timely feedback from the user.

Various mobile networks exist, and handheld portable terminals of the different mobile networks support different protocols. For compatibility with various systems, protocols and devices, the OMA interactive media document transmitted by the first transmitting means 101 can include a plurality of sets of media objects, each of which corresponds to a multi-screen service request command template based upon a specific protocol. For example but not limited thereto, a set of media objects can be a multi-screen service request command template based upon the OMA protocol or a multi-screen service request command template based upon the SMS protocol or a multi-screen service request command template based upon the SIP protocol or a link to a multi-screen service request command shortcut control page. Such link can be a link based upon the WAP protocol or a web link based upon the HTTP protocol.

As illustrated in Fig.3, the OMA interactive media document transmitted by the first transmitting means 101 preferably includes all the four sets of media objects, i.e., a multi-screen service request command template based upon the OMA protocol, a multi-screen service request command template based upon the SMS protocol, a multi-screen service request command template based upon the SIP protocol and a link to a multi-screen service request command shortcut control page. Of course the OMA interactive media document transmitted by the first transmitting means 101 can alternatively include two, three or even only one of the foregoing sets of media objects and can further include a multi-screen service request command template based upon another protocol. The user terminal 2a can determine one of the multi-screen service request command templates according to its supported protocol, edit a multi-screen service request command according to the determined template and feed it back to the network device 1.

The user receiving a multi-screen service is interested particularly in three W's (What, Where and When), i.e., multi-screen service content, a playing terminal and playing time. Therefore, the multi-screen service request command template preferably includes information related to the foregoing three items. Those skilled in the art shall appreciate that information related to the multi-screen service content, the playing terminal and the playing time can be in the form of a string of characters, a number or another identifier. For example, the three types of playing terminals can be identified in a string of characters respectively as "Mobile", "PC" and "TV" or numerically respectively as "001", "002" and "003". Correspondingly the multi-screen service request command fed back from the user terminal 2a further includes a requirement of the user on the multi-screen service content, the playing terminal and the playing time.

As described above, the multi-screen service request command template includes a number of elements, e.g., multi-screen service content, a playing terminal, playing time, etc. With the purpose of a uniform command format, an arrangement order of the respective elements shall be specified in the multi-screen service request command template. For example, a request command template in which a playing terminal, playing time, a playing date and service content are arranged in that order can be represented as {_, _:_, yy/mm/dd, _}; and the OMA interactive media document can further include the definitions of respective fields of the template and a guidance regarding how the user constructs his or her own request command. Alternatively the request command template can be an already well edited request command, and a part or all of the fields therein can be modified by the user as desired; for example, a request command template can be represented as {Mobile,9:00,20090615,NBA Final 2009 #5}, where the underlined fields can be modified by the user. The description for the format of the multi-screen service request command template herein is merely illustrative but not limiting.

Furthermore, the OMA interactive media document can further include multi-screen service notification information, which can include any one or more of the title of multi-screen service content, default playing time, a charging criterion, a charging mode and multimedia digest information of the multi-screen service content. For example, if an item of new multi-screen service content is a film, then multi-screen service notification information can include the title of the film and corresponding multimedia digest information including a brief literal introduction and/or a video clip of the film. The user can decide whether to receive the entire film by watching the brief literal introduction and/or the video clip of the film. In another example, an item of new multi-screen service content is an impending football match, then multi-screen service notification information can include the title of the football match, default playing time, a charging criterion, multimedia digest information, etc., where the default playing time is live show time of the football match, the charging criterion can charge the user differently dependent upon whether he or she watches a live show or a video record, and the multimedia digest information can include a brief literal introduction of the match and/or a historical video of two competing sides of the match. The user can decide whether to watch the match according to the multimedia digest information and decide whether to watch the live show or the video record according to the charging criterion. The quality of user experience can be enhanced greatly by adding the abundant notification information related to the multi-screen service into the OMA interactive media document transmitted to the handheld portable terminal of the user.

Different users have different preferences of multi-screen service content. For example, some users prefer to a sport program while some prefer to current political news. Furthermore different users possess different end devices, that is, possess different ranges of available playing terminals, for example, some users possess a handheld portable terminal and a television set, some users possess a handheld portable terminal and a computer, and some users possess all of a handheld portable terminal, a television set and a computer. Therefore, preferably, the collecting apparatus 10 further includes an interactive media document determining sub-means for determining the OMA interactive media document according to a subscription agreement of the user.

Specifically, the user can select the type of the multi-screen service he or she wishes to receive upon subscribing to the multi-screen service, and the interactive media document determining sub-means determines the multi-screen service notification information and the multi-screen service request command template in the OMA interactive media document to be transmitted to the user according to the subscription agreement of the user. Users can be grouped according to their different subscription requirements. For example but not limited thereto, users who have subscribed to a sport program are grouped together; and when there is new content of the sport program, the first transmitting means 101 multicasts, to handheld portable terminals of this group of users, an OMA interactive media document with multi-screen service notification information including information related to the new content of the sport program. Multi-screen service content with a very high attention rate can be set by default as being possibly received by all the users. For example, when there is content of a live show of an Olympic Games opening ceremony or a live show of the 60th anniversary of National Day, the first transmitting means 101 can broadcast, to handheld portable terminals of all the users, an OMA interactive media document with multi-screen service notification information including information related to the corresponding content. Of course the first transmitting means 101 can alternatively transmit individually, to a handheld portable terminal of a specific user, an OMA interactive media document with multi-screen service notification information including information related to content of a unique type of service to which the user subscribes.

Furthermore information related to a multi-screen service playing terminal in the multi-screen service request command template can include any one or more of identification information of a handheld portable terminal, identification information of a computer and identifier information of a television set. Specifically the user can select a range of available playing terminals for receiving the multi-screen service upon subscribing to the multi-screen service, and the interactive media document determining sub-means determines information related to a multi-screen service playing terminal in the multi-screen service request command template in the OMA interactive media document to be transmitted to the user according to the subscription agreement of the user. For example, a user possesses a handheld portable terminal and a computer, and the range of available playing terminals selected by him upon subscribing to the multi-screen service includes only a handheld portable terminal and a computer, and the first transmitting means 101 transmits, to the handheld portable terminal of the user, an OMA interactive media document with a multi-screen service request command template carrying information related to a playing terminal including identification information of the handheld portable terminal and identification information of the computer. In another feasible solution, the first transmitting means 101 transmits, to a handheld portable terminal of any user, an OMA interactive media document with a multi-screen service request command template carrying information related to a playing terminal including all the identification information of the three playing terminals, and the multi-screen service request command template further includes status information of the respective playing terminals so that the interactive media document determining sub-means sets part or all of the status information of the three playing terminals to "Available" and the other status information to "Unavailable" according to the subscription agreement of the user.

All of the foregoing scenarios in which the OMA interactive media document is determined according to the subscription agreement of the user are merely illustrative but not limitative of the invention, and those skilled in the art can make other variation or modifications in light of the foregoing description. Furthermore those skilled in the art shall appreciate that the subscription agreement of the user can be updated as required for the user. For example, the type of the multi-screen service and/or the range of available playing terminals can be updated.

According to an embodiment of the invention, the multi-screen service request command template in the OMA interactive media document transmitted to the handheld portable terminal of the user can further include information related to a transmission priority of the multi-screen service. Thus the user can be provided with selection for different qualities of service.

As described above, the set of media objects in the OMA interactive media document can include a link to a multi-screen service request command shortcut control page, which can be a link based upon the WAP protocol or a web link based upon the HTTP protocol. In the page to which the link points, information related to multi-screen service content, a playing terminal, playing time, etc. can be included, and a dropdown menu of options, an input box or another edition control can be set to thereby provide the user with an approach to request a multi-screen service more simply and conveniently. Furthermore, the page can further include multimedia digest information related to multi-screen service content to facilitate a selection by the user and improve the quality of user experience. The user can access a multi-screen service request command shortcut control page based upon the HTTP protocol and perform a corresponding operation such as inputting a number or selecting some options through the user terminal 2c, i.e., the personal computer. In response to the input of the user, the edition control built in the page will automatically generate and transmit the multi-screen service request command to the network device 1. Those skilled in the art shall appreciate that the network device 1 and a server for providing the multi-screen service request command shortcut control page can be the same device or devices independent of each other.

After the first transmitting means 101 transmits the OMA interactive media document carrying the multi-screen service request command template, the first receiving means 102 receives the multi-screen service request command fed back from the user and determines the requirement of the user on the multi-screen service according to the multi-screen service request command. As described above, the multi-screen service request command fed back from the user can come from the handheld portable terminal of the user, e.g., the user terminal 2a, etc., or the server providing the multi-screen service request command shortcut control page.

Specifically, for example, the user terminal 2a feeds back a multi-screen service request command based upon the OMA protocol with the content of {Mobile, 9:00, 20090615, NBA Final 2009 #5; PC, None; TV, 21:00, 20090615, NBA Final 2009 #5}, and the first receiving means 102 can determine, according to the request command, that: the user requests watching a live show of the 5^{th} round of NBA Finals, 2009 at 9:00 on his or her handheld portable terminal, i.e., the user terminal 2a, and a video record of the same match on his or her television set at 21:00. Those skilled in the art shall appreciate that the foregoing form and content of the multi-screen service request command are merely illustrative but not limitative of the invention.

The following steps will be performed at the side of the user terminal 2a, i.e., the handheld portable terminal of the user:

Firstly the second receiving means 201 receives the OMA interactive media document from the network device 1, where the OMA interactive media document includes at least one set of media objects including a multi-screen service request command template.

As described above, the received OMA interactive media document preferably include four sets of media objects, which are a multi-screen service request command template based upon the OMA protocol, a multi-screen service request command template based upon the SMS protocol, a multi-screen service request command template based upon the SIP protocol and a link to a multi-screen service request command shortcut control page. respectively. Of course the received OMA interactive media document can alternatively include two, three or even only one of the foregoing sets of media objects and can further include a multi-screen service request command template based upon another protocol.

Then the template acquiring means 202 can acquire the multi-screen service request command template in the set of media objects according to a protocol supported by the user terminal 2a.

Specifically, the protocol supported by the user terminal 2a can include any one or more of the OMA protocol, the SMS protocol, the SIP protocol, the WAP protocol and the HTTP protocol.

In a very possible scenario, the OMA interactive media document received by the second receiving means 201 includes a plurality of sets of media objects, which are a multi-screen service request command template based upon the OMA protocol, a multi-screen service request command template based upon the SMS protocol, a multi-screen service request command template based upon the SIP protocol and a link to a multi-screen service request command shortcut control page based upon the WAP protocol and/or based upon the HTTP protocol, respectively. According to some embodiments of the invention, if the user terminal 2a supports one or more of the foregoing protocols, e.g., the OMA protocol, the SMS protocol, the SIP protocol, the WAP protocol, etc., then the template acquiring means 202 can fetch a plurality of multi-screen service request command templates respectively based upon the different protocols. Preferably, the template acquiring means 202 will determine a multi-screen service request command template in a set of media objects corresponding to one of its supported protocols according to a predetermined rule. For different purposes, the predetermined rule here can be any one or more of the following: a transmission time for the multi-screen service request command based upon the determined protocol being the shortest; a bandwidth resource occupied by the multi-screen service request command based upon the determined protocol being the least. For example, the template acquiring means 202 can select the command template based upon the OMA protocol or the command template based upon the SIP protocol in order to achieve the least transmission time for the fed-back multi-screen service request command.

Then the command editing means 203 edits a multi-screen service request command based upon the acquired multi-screen service request command template according to an input of the user.

For example, the template acquiring means 202 has determined the multi-screen service request command template based upon the OMA protocol, and then the command editing means 203 edits a multi-screen service request command in compliance with the OMA protocol based upon the determined template according to an input of the user.

According to some embodiments of the invention, if the multi-screen service request command template includes information related to multi-screen service content, a playing terminal and playing time, then the command editing means 203 edits a multi-screen service request command including a requirement of the user on the multi-screen service content, the playing terminal and the playing time according to an input of the user. For example, a well edited multi-screen service request command based upon the OMA protocol can be represented in the form of a string of characters as {Mobile, 9:00, 20090615, NBA Final 2009 #5; PC, None; TV, 21:00, 20090615, NBA Final 2009 #5}, and this command indicates that the user requests watching a live show of the 5^{th} round of NBA Finals, 2009 at 9:00 on his or her handheld portable terminal, i.e., the user terminal 2a, and a video record of the same match on his or her television set at 21:00.

According to some embodiments of the invention, if the multi-screen service request command template can further include information related to a transmission priority of the multi-screen service, then the command editing means 203 edits a multi-screen service request command including a requirement of the user on the transmission priority of the multi-screen service according to an input of the user.

Then the second transmitting means 204 transmits the well edited multi-screen service request command to the network device 1.

According to an embodiment of the invention, the requesting apparatus 20 can further include user interface providing sub-means for providing, according to the multi-screen service request command template acquired by the template acquiring means 202, an input parameter-limited user interface for the user to edit the multi-screen service request command. Specifically, the user interface providing sub-means can provide, according to the multi-screen service request command template, a more friendly input control interface, e.g. a dropdown menu, an input box, a temporarily pop-up help box attached thereto and the like, so that the user can edit the multi-screen service request command with simple operations such as inputting a number, selecting some options, etc. For example, if the multi-screen service request command template includes information related to multi-screen service content, a playing terminal, playing time and a playing date, then a corresponding input control interface can associate the information related to the playing terminal and the service contents together and provide a plurality of combinations as indexed items, so that the user can just input into the fields of "Playing Time" and "Playing Date" for a desired specific item of "Playing Terminal + Service Content". The description here of the input control interface is merely illustrative but not limitative.

As described above, transmission of multi-screen service content can be performed by the network device 1 or another server mutually independent of the network device 1.

By way of an example in which transmission of multi-screen service content is performed by the network device 1, the network device 1 can provide a plurality of levels of quality of service according to the information related to the playing time and/or the information related to the transmission priority of the multi-screen service in the received multi-screen service request command fed back from the user, and an operator can also set various charging criteria accordingly. For example, a multi-screen service request command received by the network device 1 indicates that the user requests watching a live show of a sport match at 9:00 on his or her handheld portable terminal and a video record of the same match on his or her television set at 21:00. For a real time service like the live show, the network device 1 will provide in real time a higher bandwidth resource so as to start from 9:00 transmitting the content in real time to the handheld portable terminal of the user; and for a non-real time service like the video record, the network device 1 only needs to provide a bandwidth resource when the network is free so as to transmit the content to the television set of the user stating from some time prior to 21:00, thereby making full use of the bandwidth resource. Furthermore, a charging criterion can be associated with the transmission priority of a multi-screen service. A user with a higher charging criterion can be authorized to set a higher transmission priority in his or her multi-screen service request command, and the network device 1 will transmit preferentially the content requested in the multi-screen service request command in which the higher transmission priority is set.

Those skilled in the art shall appreciate the respective means as referred to in the invention can be implemented in a hardware module or in a functional module in software or in hardware module integrated with a software functional module.

The embodiments of the invention have been described above, but the invention will not be limited to any specific system, device or protocol and those skilled in the art can make numerous variations or modifications without departing from the scope of the appended claims.

## Claims

1. A method of collecting a multi-screen service request of a user in a network device (1) of a communication network, wherein user terminals (2a, 2b, 2c) belong to the same user, comprising the steps of:
A. (S12) transmitting, to a handheld portable terminal (2a) of the user terminals (2a, 2b, 2c) of the user, an OMA interactive media document, the OMA interactive media document comprising multimedia service notification information and at least one set of media objects comprising a multi-screen service request command template, wherein the multi-screen service request command template comprises information related to a multi-screen service; and
B. (S14) receiving a multi-screen service request command fed back from the user and determining a requirement of the user on the multi-screen service according to the multi-screen service request command.

2. The method according to claim 1,
wherein the OMA interactive media document comprises any one or more of sets of media objects respectively comprising one of:
a multi-screen service OMA request command template;
a multi-screen service SMS request command template;
a multi-screen service SIP request command template; and
a link to a shortcut control page.

3. The method according to claim 1,
wherein:
the multi-screen service request command template comprises information related to multi-screen service content, a playing terminal of the user terminals (2a, 2b, 2c) and playing time; and
in the step B (S14), a requirement of the user on the multi-screen service content, the playing terminal and the playing time is determined according to the multi-screen service request command.

4. The method according to claim 3,
wherein the information related to the playing terminal of the multi-screen service comprises at least one of:
identification information of the handheld portable terminal (2a),
identification information of a computer (2c), and
identification information of a television set (2b).

5. The method according to claim 1,
further comprising the following step before the step A (S12):
determining the multimedia service notification information and the multi-screen service request command template in the OMA interactive media document to be transmitted to the user according to a multi-screen service subscription agreement of the user.

6. The method according to claim 1,
wherein the multimedia service notification information comprises any one or more of:
the title of multi-screen service content,
a default playing time,
a charging criterion,
a charging mode, and
multimedia digest information of multi-screen service content,

7. The method according to claim 1,
wherein the multi-screen service request command template in the set of media objects in the OMA interactive media document further comprises information on a transmission priority of the multi-screen service.

8. A method of requesting a multi-screen service in a handheld portable terminal (2a) of a user and of a communication network, wherein the handheld portable terminal (2a) is a user terminal of user terminals (2a, 2b, 2c) which belong to the same user, comprising the steps of:
a. (S21) receiving, from a network device (1), an OMA interactive media document, the OMA interactive media document comprising multimedia service notification information and at least one set of media objects comprising a multi-screen service request command template, wherein the multi-screen service request command template comprises information related to a multi-screen service;
b. (S23) acquiring the multi-screen service request command template in the set of media objects according to a protocol supported by the handheld portable terminal (2a);
c. (S27) editing a multi-screen service request command based on the acquired multi-screen service request command template according to a user input; and
d. (S29) transmitting the edited multi-screen service request command to the network device (1).

9. The method according to claim 8,
wherein the handheld portable terminal (2a) supports any one or more of:
an OMA protocol, an SMS protocol, an SIP protocol, a WAP protocol and an HTTP protocol.

10. The method according to claim 8 or 9,
wherein:
in the step b (S23), a multi-screen service request command template in the set of media objects corresponding to a protocol supported by the handheld portable terminal (2a) is determined based upon a predetermined rule.

11. The method according to claim 10,
wherein the predetermined rule comprises any one or more of:
a transmission time for the multi-screen service request command based on the determined protocol being the shortest; and
a bandwidth resource occupied by the multi-screen service request command based on the determined protocol being the least.

12. The method according to claim 8,
wherein:
the multi-screen service request command template comprises information related to multi-screen service content, a playing terminal of the user terminals (2a, 2b, 2c) and playing time; and
in the step c, a (S27, S21) multi-screen service request command comprising a requirement of the user on the multi-screen service content, the playing terminal and the playing time is edited based on the user input.

13. The method according to claim 8,
wherein:
the multi-screen service request command template further comprises information on a transmission priority of a multi-screen service; and
in the step c (S27), the multi-screen service request command comprising a requirement of the user on the transmission priority of the multi-screen service is edited based on the user input.

14. The method according to claim 8,
further comprising the following step between the steps b and c (S23, S27):
providing, according to the acquired multi-screen service request command template, an input parameter limited user interface for a user to edit the multi-screen service request command.

15. A collecting apparatus (10) for collecting a multi-screen service request of a user in a
network device (1) of a communication network, wherein user terminals (2a, 2b, 2c) belong to the same user, comprising:
a first transmitting means (101) for transmitting, to a handheld portable terminal (2a) of the user terminals (2a, 2b, 2c) of the user, an OMA interactive media document, the OMA interactive media document comprising multimedia service notification information and at least one set of media objects comprising a multi-screen service request command template, wherein the multi-screen service request command template comprises information related to a multi-screen service; and
a first receiving means (102) for receiving a multi-screen service request command fed back from the user and determining a requirement of the user on the multi-screen service according to the multi-screen service request command.

16. A requesting apparatus (20) for requesting a multi-screen service in a handheld portable terminal (2a) of a user and of a communication network, wherein the handheld portable terminal (2a) is a user terminal of user terminals (2a, 2b, 2c) which belong to the same user, comprising:
a second receiving means (201) for receiving from a network device (1) an OMA interactive media document, the OMA interactive media document comprising multimedia service notification information and at least one set of media objects comprising a multi-screen service request command template, wherein the multi-screen service request command template comprises information related to a multi-screen service;
a template acquiring means (202) for acquiring the multi-screen service request command template in the set of media objects according to a protocol supported by the handheld portable terminal (2a);
a command editing means (203) for editing a multi-screen service request command based on the acquired multi-screen service request command template according to a user input; and
a second transmitting means (204) for transmitting the edited multi-screen service request command to the network device (1).

## Patentansprüche

1. Verfahren zum Sammeln einer Multi-Screen-Service-Anforderung eines Benutzers in einem Netzwerkgerät (1) eines Kommunikationsnetzwerks, wobei die Benutzerendgeräte (2a, 2b, 2c) zu demselben Benutzer gehören, umfassend die folgenden Schritte:
A. (S12) Senden, an ein tragbares Handgerät (2a) der Benutzerendgeräte (2a, 2b, 2c), eines interaktiven OMA-Mediendokuments, das Multimedia-Service-Benachrichtigungsinformation umfasst und mindestens einen Satz von Medienobjekten, welche eine Multi-Screen-Service-Anforderungs-Befehlsvorlage umfassen, wobei die Multi-Screen-Service-Anforderungs-Befehlsvorlage Information umfasst, die mit einem Multi-Screen-Service verbunden ist; und
B. (S14) Empfangen eines Multi-Screen-Service-Anforderungsbefehls, der von dem Benutzer zurückgeleitet wird, und Bestimmen ener Anforderung des Benutzers bezüglich des Multi-Screen-Service gemäß dem Multi-Screen-Service-Anforderungsbefehl.

2. Verfahren nach Anspruch 1, wobei das interaktive OMA-Mediendokument einen beliebigen oder mehr von Sätzen von Medienobjekten umfasst, die jeweils eins umfassen aus:
eine Multi-Screen-Service-OMA-Anforderungs-Befehlsvorlage;
eine Multi-Screen-Service-SMS-Anforderungs-Befehlsvorlage;
eine Multi-Screen-Service-SIP-Anforderungs-Befehlsvorlage; und
ein Link zu einer Shortcut-Kontrollseite.

3. Verfahren nach Anspruch 1,
wobei:
die Multi-Screen-Service-Anforderungs-Befehlvorlage Information umfasst, die mit einem Multi-Screen-Service-Inhalt verbunden ist, einem Abspielgerät der Benutzerendgeräte (2a, 2b, 2c) und mit einer Abspielzeit; und
in Schritt B (S14) wird gemäß dem Multi-Screen-Service-Anforderungsbefehl eine Anforderung des Benutzers bezüglich des Multi-Screen-Service-Inhalts, des Abspielgeräts und der Abspielzeit bestimmt.

4. Verfahren nach Anspruch 3,
wobei die Information, die mit dem Abspielgerät des Multi-Screen-Service zu tun hat, mindestens eins der folgenden umfasst:
Identifikationsinformation des tragbaren Handgeräts (2a),
Identifikationsinformation eines Computers (2c) und
Identifikationsinformation eines Fernsehgeräts (2b).

5. Verfahren nach Anspruch 1,
weiterhin umfassend den folgenden Schritt vor Schritt A (S12):
Bestimmen der Multimedia-Service-Benachrichtigungsinformation und der Multi-Screen-Service-Anforderungs-Befehlsvorlage in dem interaktiven OMA-Mediendokument, das an den Benutzer gesendet werden soll, gemäß einer Multi-Screen-Abonnementvereinbarung des Benutzers.

6. Verfahren nach Anspruch 1, wobei die Multimedia-Service-Benachrichtigungsinformation einen beliebigen oder mehr der folgenden umfasst:
den Titel des Multi-Screen-Service-Inhalts,
eine Standard-Abspielzeit,
ein Belastungskriterium,
einen Belastungsmodus und
Multi-Screen-Übersichtsinformation eines Multi-Screen-Service-Inhalts.

7. Verfahren nach Anspruch 1, wobei die Multi-Screen-Service-Anforderungs-Befehlsvorlage in dem Satz von Medienobjekten in dem interaktiven OMA-Mediendokument weiterhin Information umfasst über die Sendepriorität des Multi-Screen-Service.

8. Verfahren zum Anforderung eines Multi-Screen-Service in einem tragbaren Handgerät (2a) eines Benutzers und eines Kommunikationsnetzwerks, wobei das tragbare Handgerät (2a) ein Benutzerendgerät von Benutzerendgeräten (2a, 2b, 2c) ist, die zu demselben Benutzer gehören, die folgenden Schritte umfassend:
a. (S21) Empfangen, von einem Netzwerkgerät (1) eines interaktiven OMA-Mediendokuments, wobei das interaktive OMA-Mediendokument Multimedia-Service-Benachrichtigungsinformation umfasst und mindestens einen Satz von Medienobjekten, welche eine Multi-Screen-Service-Anforderungs-Befehlsvorlage umfassen, wobei die Multi-Screen-Service-Anforderungs-Befehlsvorlage Information umfasst, die mit einem Multi-Screen-Service verbunden ist;
b. (S23) Erfassen der Multi-Screen-Service-Anforderungs-Befehlsvorlage in dem Satz von Medienobjekten gemäß einem Protokoll, das von dem tragbaren Handgerät (2a) unterstützt wird;
c. (S27) Bearbeiten eines Multi-Screen-Service-Anforderungsbefehls auf Grundlage der erfassten Multi-Screen-Service-Anforderungs-Befehlsvorlage gemäß einer Benutzereingabe; und
d. (S29) Senden des bearbeiteten Multi-Screen-Service-Anforderungsbefehls an das Netzwerkgerät (1).

9. Verfahren nach Anspruch 8,
wobei das tragbare Handgerät (2a) jedes oder mehr der folgenden unterstützt:
ein OMA-Protokoll, ein SMS-Protokoll, ein SIP-Protokoll, ein WAP-Protokoll und ein HTTP-Protokoll.

10. Verfahren nach Anspruch 8 oder 9,
wobei:
in Schritt b (S23) eine Multi-Screen-Service-Anforderungs-Befehlsvorlage in dem Satz von Medienobjekten, die einem Protokoll entsprechen, welches von dem tragbaren Handgerät (2a) unterstützt wird, bestimmt wird auf Grundlage einer vorbestimmten Regel.

11. Verfahren nach Anspruch 10,
wobei die vorbestimmte Regel eine oder mehrere der folgenden umfasst:
eine Sendezeit für den Multi-Screen-Service-Anforderungsbefehl auf Grundlage des bestimmten Protokolls, die am kürzesten ist; und
eine Bandbreitenressource, die für den Multi-Screen-Service-Anforderungsbefehl belegt wird auf Grundlage des bestimmten Protokolls, die die letzte ist.

12. Verfahren nach Anspruch 8,
wobei:
die Multi-Screen-Service-Anforderungs-Befehlvorlage Information umfasst, die mit einem Multi-Screen-Service-Inhalt verbunden ist, einem Abspielgerät der Benutzerendgeräte (2a, 2b, 2c) und mit einer Abspielzeit; und
in Schritt c ein Multi-Screen-Service-Anforderungsbefehl (S27,S21), der eine Anforderung des Benutzers bezüglich des Multi-Screen-Service-Inhalts, des Abspielgeräts und der Abspielzeit umfasst, bearbeitet wird auf Grundlage der Benutzereingabe.

13. Verfahren nach Anspruch 8,
wobei:
die Multi-Screen-Service-Anforderungs-Befehlsvorlage weiterhin umfasst Information über die Sendepriorität eines Multi-Screen-Service; und
in Schritt c (S27) der Multi-Screen-Service-Anforderungsbefehl, der eine Anforderung des Benutzers bezüglich der Sendepriorität des Multi-Screen-Service-Inhalts umfasst, bearbeitet wird auf Grundlage der Benutzereingabe.

14. Verfahren nach Anspruch 8,
weiterhin umfassend den folgenden Schritt zwischen den Schritten b und c (S23, S27):
Bereitstellen, gemäß der erfassten Multi-Screen-Service-Anforderungs-Befehlsvorlage, einer eingabeparameterbeschränkten Benutzerschnittstelle für einen Benutzer, um den Multi-Screen-Service-Anforderungsbefehl zu bearbeiten.

15. Sammelvorrichtung (10) zum Sammeln einer Multi-Screen-Service-Anforderung eines Benutzers in einem Netzwerkgerät (1) eines Kommunikationsnetzwerks, wobei die Benutzerendgeräte (2a, 2b, 2c) zu demselben Benutzer gehören, umfassend:
ein erstes Sendemittel (101) zum Senden, an ein tragbares Handgerät (2a) der Benutzerendgeräte (2a, 2b, 2c) des Benutzers, eines interaktiven OMA-Mediendokuments, wobei das interaktive OMA-Mediendokument Multimedia-Service-Benachrichtigungsinformation enthält und mindestens einen Satz von Medienobjekten, die eine Multi-Screen-Service-Anforderungs-Befehlsvorlage umfassen, wobei die Multi-Screen-Service-Anforderungs-Befehlsvorlage Information umfasst, welche sich bezieht auf einen Multimedia-Screen-Service;
und
ein erstes Empfangsmittel (102) zum Empfangen eines Multi-Screen-Service-Anforderungsbefehls, der von dem Benutzer zurückgeleitet wird, und Bestimmen einer Anforderung des Benutzers bezüglich des Multi-Screen-Service gemäß dem Multi-Screen-Service-Anforderungsbefehl.

16. Anforderungsvorrichtung (20) zum Anfordern eines Multi-Screen-Service in einem tragbaren Handgerät (2a) eines Benutzers und eines Kommunikationsnetzwerks, wobei das tragbare Handgerät (2a) ein Benutzerendgerät von Benutzerendgeräten (2a, 2b, 2c) ist, die zu demselben Benutzer gehören, umfassend:
ein zweites Empfangsmittel (201) zum Empfangen von einem Netzwerkgerät (1) eines interaktiven OMA-Mediendokuments, wobei das interaktive OMA-Mediendokument umfasst Multimedia-Service-Benachrichtigungsinformation und mindestens einen Satz von Medienobjekten, welche eine Multi-Screen-Service-Anforderungs-Befehlsvorlage umfassen, wobei die Multi-Screen-Service-Anforderungs-Befehlsvorlage Information umfasst, die mit einem Multi-Screen-Service verbunden ist;
ein Vorlagenerfassungsmittel (202) zum Erfassen der Multi-Screen-Service-Anforderungs-Befehlsvorlage in dem Satz von Medienobjekten gemäß einem Protokoll, das von dem tragbaren Handgerät (2a) unterstützt wird;
ein Befehlsbearbeitungsmittel (203) zum Bearbeiten eines Multi-Screen-Service-Anforderungsbefehls auf Grundlage der erfassten Multi-Screen-Service-Anforderungs-Befehlsvorlage gemäß einer Benutzereingabe; und
ein zweites Sendemittel (204) zum Senden des bearbeiteten Multi-Screen-Service-Anforderungsbefehls an das Netzwerkgerät (1).

## Revendications

1. Procédé de collecte d'une demande de service multi-écrans d'un utilisateur dans un dispositif de réseau (1) d'un réseau de communication, dans lequel des terminaux utilisateurs (2a, 2b, 2c) appartiennent au même utilisateur, comprenant les étapes suivantes :
A. (S12) transmettre, à un terminal portatif à main (2a) des terminaux utilisateurs (2a, 2b, 2c) de l'utilisateur, un document multimédia interactif OMA, le document multimédia interactif OMA comprenant des informations de notification de service multimédia et au moins un ensemble d'objets multimédia comprenant un modèle de commande de demande de service multi-écrans, dans lequel le modèle de commande de demande de service multi-écrans comprend des informations relatives à un service multi-écrans ; et
B. (S14) recevoir une commande de demande de service multi-écrans renvoyée par l'utilisateur et déterminer une exigence de l'utilisateur sur le service multi-écrans conformément à la commande de demande de service multi-écrans.

2. Procédé selon la revendication 1,
dans lequel le document multimédia interactif OMA comprend un quelconque ou plusieurs ensembles d'objets multimédia comprenant respectivement un des éléments suivants :
un modèle de commande de demande OMA de service multi-écrans ;
un modèle de commande de demande SMS de service multi-écrans ;
un modèle de commande de demande SIP de service multi-écrans ; et
un lien vers une page de commande de raccourci.

3. Procédé selon la revendication 1,
dans lequel :
le modèle de commande de demande de service multi-écrans comprend des informations relatives au contenu de service multi-écrans, à un terminal de lecture des terminaux utilisateurs (2a, 2b, 2c) et à un temps de lecture ; et
à l'étape B (S14), une exigence de l'utilisateur sur le contenu de service multi-écrans, le terminal de lecture et le temps de lecture sont déterminés conformément à la commande de demande de service multi-écrans.

4. Procédé selon la revendication 3,
dans lequel les informations relatives au terminal de lecture du service multi-écrans comprennent :
des informations d'identification du terminal portatif à main (2a), et/ou des informations d'identification d'un ordinateur (2c), et/ou
des informations d'identification d'un poste de télévision (2b).

5. Procédé selon la revendication 1,
comprenant en outre l'étape suivante avant l'étape A (S12) :
déterminer les informations de notification de service multimédia et le modèle de commande de demande de service multi-écrans dans le document multimédia interactif OMA devant être transmis à l'utilisateur conformément à un contrat d'abonnement au service multi-écrans de l'utilisateur.

6. Procédé selon la revendication 1,
dans lequel les informations de notification de service multimédia comprennent un quelconque ou plusieurs éléments parmi :
le titre du contenu de service multi-écrans,
un temps de lecture par défaut,
un critère de facturation,
un mode de facturation, et
des informations multimédia condensées du contenu de service multi-écrans.

7. Procédé selon la revendication 1,
dans lequel le modèle de commande de demande de service multi-écrans dans l'ensemble d'objets multimédia dans le document multimédia interactif OMA comprend en outre des informations sur une priorité de transmission du service multi-écrans.

8. Procédé de demande d'un service multi-écrans dans un terminal portatif à main (2a) d'un utilisateur et d'un réseau de communication, dans lequel le terminal portatif à main (2a) est un terminal utilisateur parmi des terminaux utilisateurs (2a, 2b, 2c) qui appartiennent au même utilisateur, comprenant les étapes suivantes :
a. (S21) recevoir, à partir d'un dispositif de réseau (1), un document multimédia interactif OMA, le document multimédia interactif OMA comprenant des informations de notification de service multimédia et au moins un ensemble d'objets multimédia comprenant un modèle de commande de demande de service multi-écrans, dans lequel le modèle de commande de demande de service multi-écrans comprend des informations relatives à un service multi-écrans ;
b. (S23) acquérir le modèle de commande de demande de service multi-écrans dans l'ensemble d'objets multimédia conformément à un protocole pris en charge par le terminal portatif à main (2a) ;
c. (S27) modifier une commande de demande de service multi-écrans sur la base du modèle de commande de demande de service multi-écrans acquis conformément à une entrée de l'utilisateur ; et
d. (S29) transmettre la commande de demande de service multi-écrans modifiée au dispositif de réseau (1).

9. Procédé selon la revendication 8,
dans lequel le terminal portatif à main (2a) prend en charge un quelconque ou plusieurs protocoles parmi :
un protocole OMA, un protocole SMS, un protocole SIP, un protocole WAP et un protocole HTTP.

10. Procédé selon la revendication 8 ou 9,
dans lequel :
à l'étape b (S23), un modèle de commande de demande de service multi-écrans dans l'ensemble d'objets multimédia correspondant à un protocole pris en charge par le terminal portatif à main (2a) est déterminé sur la base d'une règle prédéterminée.

11. Procédé selon la revendication 10,
dans lequel la règle prédéterminée comprend un quelconque ou plusieurs éléments parmi :
un temps de transmission pour la commande de demande de service multi-écrans sur la base du protocole déterminé est le plus court ; et
une ressource de bande passante occupée par la commande de demande de service multi-écrans sur la base du protocole déterminé est la plus faible.

12. Procédé selon la revendication 8,
dans lequel :
le modèle de commande de demande de service multi-écrans comprend des informations relatives au contenu de service multi-écrans, à un terminal de lecture des terminaux utilisateurs (2a, 2b, 2c) et à un temps de lecture ; et
à l'étape c, une (S27, S21) commande de demande de service multi-écrans comprenant une exigence de l'utilisateur sur le contenu de service multi-écrans, le terminal de lecture et le temps de lecture est modifiée sur la base de l'entrée de l'utilisateur.

13. Procédé selon la revendication 8,
dans lequel :
le modèle de commande de demande de service multi-écrans comprend en outre des informations sur une priorité de transmission d'un service multi-écrans ; et
à l'étape c (S27), la commande de demande de service multi-écrans comprenant une exigence de l'utilisateur sur la priorité de transmission du service multi-écrans est modifiée sur la base de l'entrée de l'utilisateur.

14. Procédé selon la revendication 8,
comprenant en outre l'étape suivante entre les étapes b et c (S23, S27) :
fournir, conformément au modèle de commande de demande de service multi-écrans acquis, une interface utilisateur limitée de paramètre d'entrée pour un utilisateur afin de modifier la commande de demande de service multi-écrans.

15. Appareil de collecte (10) pour collecter une demande de service multi-écrans d'un utilisateur dans un dispositif de réseau (1) d'un réseau de communication, dans lequel des terminaux utilisateurs (2a, 2b, 2c) appartiennent au même utilisateur, comprenant :
un premier moyen de transmission (101) pour transmettre, à un terminal portatif à main (2a) des terminaux utilisateurs (2a, 2b, 2c) de l'utilisateur, un document multimédia interactif OMA, le document multimédia interactif OMA comprenant des informations de notification de service multimédia et au moins un ensemble d'objets multimédia comprenant un modèle de commande de demande de service multi-écrans, dans lequel le modèle de commande de demande de service multi-écrans comprend des informations relatives à un service multi-écrans ;
et
un premier moyen de réception (102) pour recevoir une commande de demande de service multi-écrans renvoyée par l'utilisateur et déterminer une exigence de l'utilisateur sur le service multi-écrans conformément à la commande de demande de service multi-écrans.

16. Appareil de demande (20) pour demander un service multi-écrans dans un terminal portatif à main (2a) d'un utilisateur et d'un réseau de communication, dans lequel le terminal portatif à main (2a) est un terminal utilisateur parmi des terminaux utilisateurs (2a, 2b, 2c) qui appartiennent au même utilisateur, comprenant :
un deuxième moyen de réception (201) pour recevoir à partir d'un dispositif de réseau (1) un document multimédia interactif OMA, le document multimédia interactif OMA comprenant des informations de notification de service multimédia et au moins un ensemble d'objets multimédia comprenant un modèle de commande de demande de service multi-écrans, dans lequel le modèle de commande de demande de service multi-écrans comprend des informations relatives à un service multi-écrans ;
un moyen d'acquisition de modèle (202) pour acquérir le modèle de commande de demande de service multi-écrans dans l'ensemble d'objets multimédia conformément à un protocole pris en charge par le terminal portatif à main (2a) ;
un moyen de modification de commande (203) pour modifier une commande de demande de service multi-écrans sur la base du modèle de commande de demande de service multi-écrans acquis conformément à une entrée de l'utilisateur ; et
un deuxième moyen de transmission (204) pour transmettre la commande de demande de service multi-écrans modifiée au dispositif de réseau (1).
